# FASCICULE DE BREVET EUROPEEN

(11) **EP 2 516 898 B1**
(45) Date de publication et mention de la délivrance du brevet: **06.03.2019**
(21) Numéro de dépôt: 10807708.2
(22) Date de dépôt: 21.12.2010
(51) Int. Cl.: F16J 15/02, F16J 15/06, F16J 15/48, A47J 27/09, A47J 27/08, A47J 27/04

(54) **JOINT POUR AUTOCUISEUR COMPORTANT UNE JUPE SOUPLE POURVUE D'ENCOCHES**
DICHTUNG FÜR EINEN SCHNELLKOCHTOPF MIT EINER FLEXIBLEN SCHÜRZE MIT KERBEN
SEAL FOR A PRESSURE COOKER COMPRISING A FLEXIBLE APRON PROVIDED WITH RECESSES

(30) Priorité: 23.12.2009 FR 0959553; 26.02.2010 FR 1051407
(43) Date de publication de la demande: 31.10.2012
(73) Titulaire: SEB S.A., 69130 Ecully (FR)
(72) Inventeur: CHAMEROY, Eric, F-21260 Veronnes (FR); CARTIGNY, Michel, Pierre, F-21310 Mirebeau Sur Beze (FR)
(74) Mandataire: Weber, Jean-François
(86) Numéro de dépôt international: PCT/FR2010/052859
(87) Numéro de publication internationale: WO 2011/077037

(56) Documents cités:
- EP-A1- 0 684 001
- CH-A5- 571 335
- US-A- 2 600 714
- US-A- 4 592 479
- US-A1- 2003 209 865

## Description

### DOMAINE TECHNIQUE

La présente invention se rapporte au domaine technique général des appareils de cuisson d'aliments sous pression dans une atmosphère chargée en vapeur, tels que les autocuiseurs.

La présente invention se rapporte plus particulièrement aux joints d'étanchéité destinés à être mis en place dans de tels appareils pour assurer, en fonctionnement, l'étanchéité entre l'intérieur et l'extérieur de l'appareil.

La présente invention concerne ainsi un joint d'étanchéité pour appareil de cuisson d'aliments sous pression, ledit appareil comprenant une cuve ainsi qu'un couvercle destiné à être rapporté sur ladite cuve pour définir une enceinte de cuisson, ledit joint étant conçu pour être interposé entre le couvercle et la cuve afin d'assurer l'étanchéité de ladite enceinte de cuisson, ledit joint comportant un talon à partir duquel fait saillie au moins une première lèvre.

La présente invention concerne également un appareil de cuisson d'aliments sous pression équipé ou susceptible d'être équipé d'un joint d'étanchéité conforme à l'invention.

### TECHNIQUE ANTERIEURE

Quel que soit le type d'appareil de cuisson d'aliments sous pression concerné, il est bien connu d'employer un joint d'étanchéité, notamment en matériau élastomère, pour assurer l'étanchéité entre l'intérieur et l'extérieur de l'enceinte de cuisson lors de la montée en pression de l'appareil et pendant toute la durée du cycle de cuisson.

A cet effet, on utilise généralement un joint de type corde, ou encore un joint à lèvres, qui est comprimé entre le couvercle et le rebord supérieur de la cuve.

Dans certains cas, de tels joints peuvent également constituer des organes de sécurité autorisant la fuite de vapeur hors de l'enceinte de cuisson lorsqu'une surpression trop importante apparaît au sein de ladite enceinte de cuisson.

Afin de permettre audit joint de se déformer pour remplir cette fonction de sécurité, il est connu de rogner localement le talon du joint, en pratiquant un ou plusieurs enlèvements de matière à partir de la surface périphérique dudit talon.

Ainsi, on ménage un ou plusieurs évidements qui permettent au talon du joint de se déformer vers l'extérieur jusqu'à ce qu'il vienne s'écraser contre le bord latéral du couvercle ou même s'extrude à travers une fenêtre ménagée dans le couvercle. Ce faisant, la lèvre accompagne la déformation locale du talon selon un mouvement radial centrifuge de telle sorte que, lorsque la pression régnant dans l'enceinte de cuisson excède une valeur prédéterminée, la lèvre franchit le rebord supérieur de la cuve en basculant par-dessus celui-ci, ce qui rompt l'étanchéité de l'enceinte de cuisson et permet l'évacuation du fluide en surpression.

Si de tels dispositifs présentent indéniablement des avantages en matière de sécurité de fonctionnement, en permettant notamment d'assurer un ultime niveau de sécurité dans l'hypothèse où d'autres dispositifs de régulation ou de sécurité seraient défaillants, ils souffrent parfois de certains inconvénients.

En premier lieu, le passage du joint de sa configuration d'étanchéité à sa configuration de fuite peut être relativement brutal en raison du caractère soudain du basculement de la lèvre par-dessus le rebord de la cuve. Il peut en résulter une forte et subite décharge de vapeur, éventuellement chargée de débris d'aliments, laquelle est susceptible de provoquer des brûlures à l'utilisateur et d'encrasser le fourneau ou le plan de travail.

De surcroît, l'extrusion forcée d'une partie du joint, et en particulier d'une lèvre, à travers un passage étroit ménagé soit dans le couvercle lui-même, soit entre le couvercle et le rebord de cuve, est de nature à endommager sévèrement et irrémédiablement ledit joint, de telle sorte que ce dernier doit en général être remplacé après un tel déclenchement de sécurité.

En outre, la présence d'évidements périphériques a pour effet d'affaiblir localement le joint, et plus particulièrement son talon, ce qui l'expose à des risques de rupture sous contrainte et tend par conséquent à réduire sa longévité voire sa fiabilité.

Enfin, sur certains modèles d'autocuiseurs, il est nécessaire de faire coïncider les zones de déformation du joint avec des passages de fuite spécifiquement prévus à cet effet au niveau de la cuve et/ou du couvercle, de telle sorte que les joints correspondants doivent faire l'objet d'une attention particulière lors de leur montage dans l'appareil, et sont parfois pourvus à cet effet de détrompeurs ou de moyens d'indexage destinés à garantir leur positionnement unique et reproductible.

Bien entendu, ceci engendre des contraintes de fabrication qui ont généralement pour effet de compliquer les opérations de fabrication et d'assemblage, du joint comme de l'autocuiseur, et d'en augmenter le coût.

Le document EP-0 684 001 A1 décrit un joint dont une portion présente un dégagement externe formant une section transversale affaiblie pour permettre une déformation du joint.

### EXPOSE DE L'INVENTION

Les objets assignés à la présente invention visent donc à remédier aux inconvénients susmentionnés et à proposer un nouveau joint d'étanchéité pour appareil de cuisson d'aliments sous pression qui permette d'assurer la sécurité de fonctionnement dudit appareil de cuisson en cas de surpression tout en étant particulièrement fiable et robuste.

Un autre objet assigné à l'invention vise à proposer un nouveau joint d'étanchéité dont la structure soit particulièrement simple et qui soit peu onéreux à fabriquer.

Un autre objet assigné à l'invention vise à proposer un nouveau joint d'étanchéité dont le fonctionnement soit particulièrement maîtrisé, reproductible et sûr, et qui présente un comportement homogène et progressif.

Un autre objet assigné à l'invention vise à proposer un nouveau joint d'étanchéité qui présente une bonne ergonomie et dont la mise en place soit facile et intuitive.

Un autre objet assigné à l'invention vise à proposer un nouveau joint d'étanchéité capable d'assurer aussi bien la sécurité préventive de l'utilisateur au moment de débuter le cycle de cuisson que la sécurité active de l'utilisateur au cours dudit cycle de cuisson.

Un autre objet assigné à l'invention vise à proposer un nouvel appareil de cuisson d'aliments sous pression dont la sécurité de fonctionnement soit renforcée, et la fiabilité et la longévité améliorées.

Un autre objet assigné à l'invention vise à proposer un nouvel appareil de cuisson d'aliments sous pression dont la structure et l'assemblage soient simplifiés et le coût de production réduit.

Les objets assignés à l'invention sont atteints à l'aide d'un joint d'étanchéité pour appareil de cuisson d'aliments sous pression conforme à la revendication 1.

Les objets assignés à l'invention sont également atteints à l'aide d'un appareil de cuisson d'aliments sous pression pourvu d'un joint d'étanchéité conforme à l'invention.

### DESCRIPTIF SOMMAIRE DES DESSINS

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 représente, selon une vue en perspective de dessus, une variante de réalisation de joint d'étanchéité conforme à l'invention.
- La figure 2 illustre, selon une vue en perspective de dessous, le joint d'étanchéité représenté sur la figure 1.
- La figure 3 illustre, selon une vue partielle en coupe suivant une direction radiale (Y₁Y₁'), une variante de réalisation d'appareil de cuisson conforme à l'invention au sein duquel est monté un joint d'étanchéité correspondant à celui représenté sur les figures 1 et 2, lorsque le couvercle est verrouillé sur la cuve et que l'enceinte de cuisson se trouve sous pression normale de fonctionnement.
- La figure 4 illustre, selon une vue partielle en coupe, l'appareil représenté sur la figure 3 lorsque la pression régnant dans l'enceinte dépasse le seuil de pression prédéterminé et provoque le passage du joint en configuration de fuite.
- La figure 5 illustre, selon une vue partielle en coupe suivant une direction radiale (Y₂Y₂'), le comportement du joint illustré sur les figures 1 à 4 lorsque celui-ci est monté à l'envers au sein de l'appareil de cuisson représenté sur les figures 3 et 4.

### MEILLEURE MANIERE DE REALISER L'INVENTION

La présente invention se rapporte à un appareil de cuisson 1 d'aliments sous pression, préférentiellement du genre autocuiseur à usage domestique.

Ledit appareil 1 comprend une cuve 2 ainsi qu'un couvercle 3 qui est destiné à être rapporté sur ladite cuve, et plus préférentiellement à être posé sur le rebord supérieur 4 de ladite cuve, pour définir une enceinte de cuisson 5.

Bien entendu, la présente invention n'est nullement limitée à un appareil de cuisson d'aliments et peut notamment trouver application au sein d'autres types de récipients destinés à contenir de la vapeur, et plus particulièrement de la vapeur d'eau, sous pression, tels que par exemple les autoclaves.

Par commodité de description, on considérera dans ce qui suit que l'appareil de cuisson 1 est placé sur un plan de travail P0 plan et horizontal, le fond 2A de la cuve reposant sur ledit plan de travail et le couvercle 3 étant superposé à la cuve 2, sensiblement à l'aplomb de cette dernière selon la direction verticale (ZZ') normale audit plan de travail.

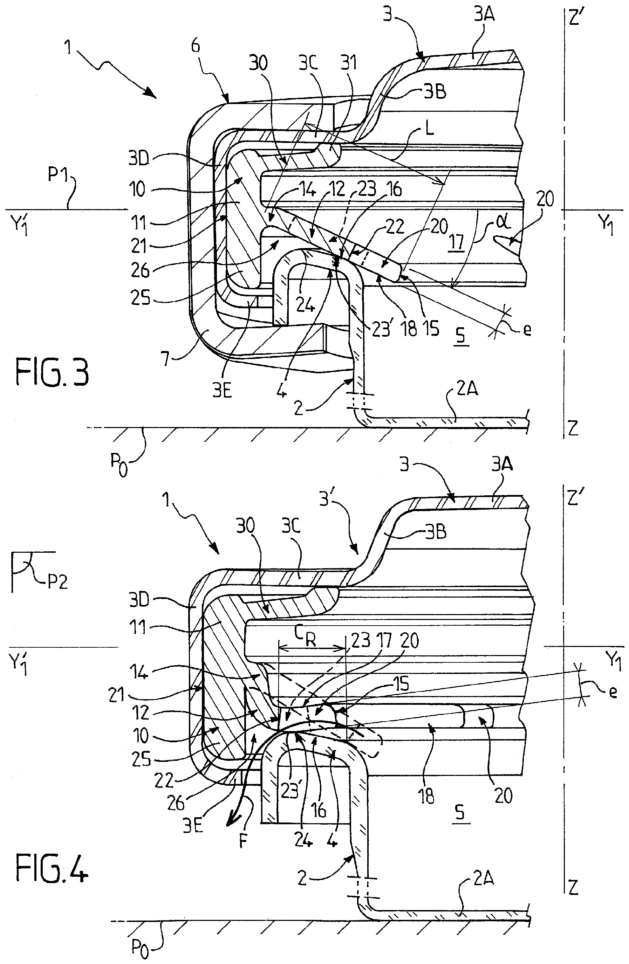

Selon une variante de réalisation correspondant à celle illustrée sur les figures 3, 4 et 5, le couvercle 3 pourra être pourvu d'une zone centrale 3A bombée et surélevée qui se poursuit radialement vers l'extérieur du couvercle 3 par un flanc tombé 3B, lui-même suivi par un plat annulaire 3C qui se poursuit par un bord annulaire tombé 3D, préférentiellement sensiblement droit et vertical, ce dernier se terminant par une extrémité terminale 3E, roulée intérieurement.

Bien entendu, le couvercle 3 pourra présenter tout diamètre ou toute autre forme de réalisation, et notamment être sensiblement plat, c'est-à-dire présenter une zone centrale 3A non bombée, sans flanc tombé 3B, et se confondant directement avec le plat annulaire 3C pour former sensiblement un disque horizontal.

Le rebord supérieur 4 de la cuve 2 peut avantageusement comporter un bord tombé, roulé ou embouti à partir de l'extrémité supérieure de la cuve. Le dôme formé par ledit rebord supérieur 4 peut notamment être sensiblement horizontal, ou, de préférence, légèrement incliné vers l'intérieur de la cuve, tel que cela est illustré sur les figures 3 à 5, et former un pavillon sensiblement tronconique convergeant vers l'intérieur et le bas de ladite cuve.

Bien entendu, il est parfaitement envisageable d'adapter l'invention à toute forme de rebord 4 de cuve, et notamment à un rebord sensiblement plat et horizontal, ou encore à un rebord incliné vers le bas et l'extérieur de la cuve.

Le couvercle 3 et la cuve 2 seront avantageusement réalisés dans un matériau rigide, de préférence métallique, apte à supporter la chaleur et les contraintes de la cuisson sous pression.

De manière connue, l'appareil 1 comprend également des moyens de verrouillage 6 qui permettent de maintenir le couvercle 3 sur la cuve 2 et plus particulièrement d'éviter la séparation du couvercle et de la cuve, et *a fortiori,* l'expulsion du couvercle, lorsque l'enceinte de cuisson 4 se trouve sous pression de fonctionnement

Lesdits moyens de verrouillage 6 peuvent se présenter sous différentes formes sans que cela ne constitue une restriction de l'invention, dès lors qu'ils permettent d'assurer alternativement, sous le contrôle de l'utilisateur, le verrouillage et le déverrouillage du couvercle 3 sur la cuve 2.

A titre d'exemple, lesdits moyens de verrouillage 6 pourront mettre en oeuvre un système à baïonnette, à étrier à segments, etc.

Selon une variante de réalisation préférentielle illustrée sur la figure 3, lesdits moyens de verrouillage 6 comprendront au moins une mâchoire 7 et de préférence deux mâchoires 7 diamétralement opposées et montées mobiles au moins selon une composante radiale sur le couvercle 3, lesdites mâchoires 7 étant destinées à venir en prise sous le rebord supérieur 4 de la cuve 2.

Par ailleurs, l'appareil de cuisson 1 est pourvu d'un joint d'étanchéité 10 qui est conçu pour être interposé entre le couvercle 3 et la cuve 2 afin d'assurer l'étanchéité de l'enceinte de cuisson 5, en conditions normales de fonctionnement, et plus particulièrement lorsque ladite enceinte de cuisson 5 est remplie de vapeur d'eau à une surpression sensiblement comprise entre 1 et 200 kPa et une température de l'ordre de 100°C à 135°C.

Ledit joint d'étanchéité 10 comporte un talon 11 à partir duquel fait saillie au moins une première lèvre 12, laquelle s'étend entre une racine 14 qui la relie au talon 11 et une extrémité libre 15 opposée.

Avantageusement, la première lèvre 12 est destinée à venir en appui contre un siège 16 qui peut être formé par le couvercle ou préférentiellement, tel que cela est illustré sur les figures 3 et 4, par le rebord supérieur 4 de la cuve, afin d'assurer une jonction étanche du couvercle 3 et de la cuve 2.

Bien entendu, l'invention n'est nullement limitée à une forme particulière de joint d'étanchéité 10, ce dernier pouvant être adapté à toute forme particulière d'appareil de cuisson 1, et plus particulièrement de rebord de cuve 4 et de couvercle 3, et notamment présenter une forme géométrique générale sensiblement ovale, carrée, polygonale, ou de tout autre type approprié.

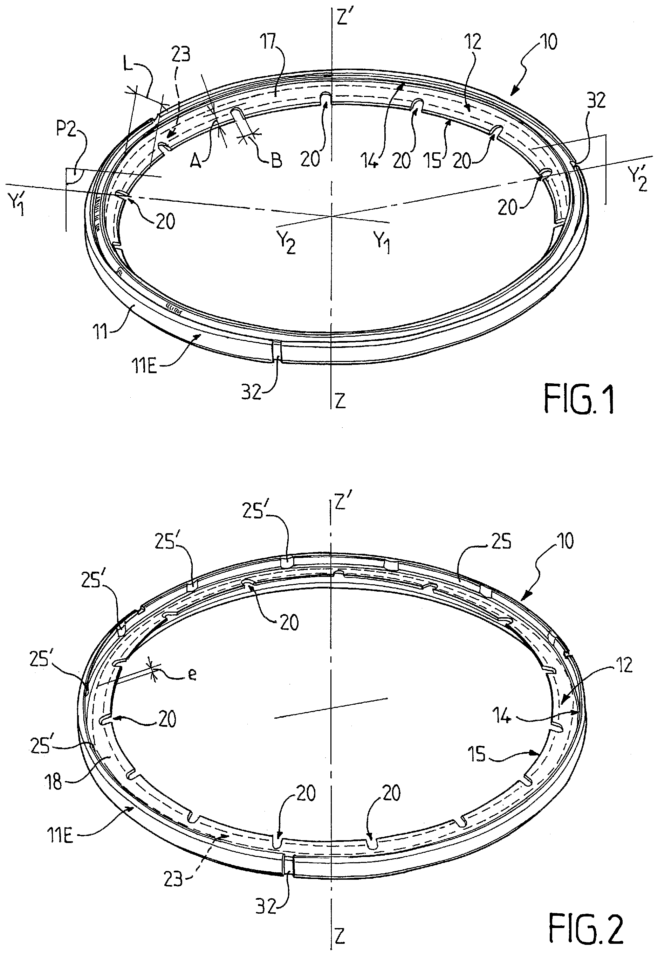

Toutefois, de façon particulièrement préférentielle, tel que cela est illustré sur les figures 1 et 2, le joint d'étanchéité 10 présentera globalement une forme de révolution sensiblement circulaire, dont l'axe générateur correspondra à la direction verticale (ZZ'), et il en ira de même pour l'appareil de cuisson 1, et plus particulièrement la cuve 2 et de couvercle 3, de telle sorte que la première lèvre 12 pourra avantageusement former une couronne d'étanchéité au contact du rebord de cuve 4.

De surcroît, bien que la disposition relative de la première lèvre 12 par rapport au talon 11 ne soit nullement limitée à une variante de réalisation particulière, le talon 11 entourera de préférence ladite première lèvre 12 à la périphérie de cette dernière.

En d'autres termes, le talon 11 formera de préférence une couronne périphérique contenant la première lèvre 12, cette dernière formant une jupe faisant saillie depuis ledit talon 11 vers l'intérieur du joint 10. Ainsi, la première lèvre 12 possédera de préférence par construction au moins une composante d'extension radiale centripète entre sa racine 14 et son extrémité libre 15.

De préférence, ladite première lèvre 12 s'étendra de façon sensiblement rectiligne entre sa racine 14 et son extrémité libre 15, au moins lorsque le joint 10 se trouve au repos, sa face supérieure 17 et sa face inférieure 18 étant sensiblement plane.

En outre, la première lèvre 12 possédera de préférence une épaisseur e sensiblement constante depuis sa racine 14 jusqu'à son extrémité libre 15, les faces supérieure 17 et inférieure 18 étant de préférence sensiblement parallèles entre elles.

Selon une caractéristique importante de l'invention, la première lèvre 12 est percée d'au moins une fenêtre d'échappement 20 qui la traverse selon son épaisseur e, et ladite première lèvre 12 forme un organe de déplacement différentiel conçu pour permettre à la fenêtre d'échappement 20 d'opérer, lorsque la pression régnant dans l'enceinte de cuisson 5 dépasse un seuil prédéterminé P_{S}, un déplacement relatif par rapport au talon 11, ledit déplacement permettant à ladite fenêtre d'échappement 20 d'ouvrir un orifice de fuite par l'intermédiaire duquel l'enceinte de cuisson 5 est mise en communication avec l'extérieur de l'appareil 1 .

De préférence, ledit seuil de pression prédéterminé P_{S} est sensiblement compris entre 140 kPa et 270 kPa, voire entre 180 kPa et 200 kPa, ce qui permet de déclencher la mise en sécurité du joint et l'apparition d'une fuite lorsque la pression régnant dans l'enceinte de cuisson dépasse celle utile à la cuisson et atteint un niveau jugé dangereux pour l'appareil ou l'utilisateur.

Avantageusement, le joint d'étanchéité 10 conforme à l'invention est ainsi conçu pour pouvoir passer d'une configuration d'étanchéité, dans laquelle ledit joint 10 assure l'étanchéité de l'enceinte de cuisson en réalisant une jonction étanche entre le couvercle et la cuve, et plus particulièrement dans laquelle la fenêtre d'échappement 20 occupe une première position telle que la première lèvre 12 coopère de manière étanche avec le siège 16, tel que cela est illustré sur la figure 3, à une configuration de fuite, dans laquelle l'étanchéité de l'enceinte de cuisson 5 est rompue au niveau dudit joint 10, et plus particulièrement dans laquelle la fenêtre d'échappement 20 occupe une seconde position distincte de la première et telle que l'enceinte de cuisson 5 communique avec l'extérieur de l'appareil de cuisson 1 par l'intermédiaire de ladite fenêtre d'échappement 20, cette dernière formant ainsi un orifice de fuite, tel que cela est illustré sur la figure 4.

Avantageusement, la première lèvre 12 pourvue de sa ou de ses fenêtres d'échappement 20 forme, vis-à-vis du siège 16 et plus particulièrement du rebord de cuve 4, un obturateur mobile dont le changement de position est commandé par le niveau de pression régnant dans l'enceinte de cuisson 5, de telle sorte qu'il peut ainsi remplir un rôle sensiblement analogue à celui d'une soupape de sécurité.

De préférence, le joint d'étanchéité 10 conforme à l'invention sera utilisé de manière redondante comme organe de sécurité supplémentaire au sein d'un appareil de cuisson 1 comportant déjà un organe de régulation de la pression de fonctionnement, tel qu'une soupape tarée, et/ou un organe de sécurité de type clapet monté sur le couvercle.

Par « *former un organe de déplacement différentiel* », on indique que la première lèvre 12 est conçue pour autoriser une mobilité relative de la fenêtre d'échappement 20 par rapport au talon 11, cette mobilité relative étant nécessaire et suffisante, et de préférence suffisante à elle seule, pour permettre le passage du joint 10 de sa configuration d'étanchéité à sa configuration de fuite.

En d'autres termes, et bien qu'il ne soit pas exclu que le talon 11 lui-même puisse être déplacé sous l'effet des variations, et notamment de l'accroissement, de la pression régnant dans l'enceinte de cuisson 5, ledit talon 11 entraînant alors à sa suite la lèvre 12 et la fenêtre d'échappement 20 selon un premier déplacement, c'est la contribution de la première lèvre 12 au déplacement supplémentaire de la fenêtre d'échappement 20 par rapport au talon 11, selon un second déplacement, qui permet de mettre en communication l'enceinte de cuisson 5 avec l'extérieur de l'appareil 1 ou au contraire d'interrompre cette communication.

Ainsi, la première lèvre 12 permet à la fenêtre d'échappement 20 de se déplacer selon une trajectoire et une amplitude distinctes de celles, éventuelles, du talon 11.

De préférence, que le talon 11 soit ou non susceptible de se déplacer une fois le joint mis en place au sein de l'appareil de cuisson, ledit talon 11 est agencé pour venir en butée contre un élément de retenue 21, qui peut appartenir à la cuve 2 ou au couvercle 3, et qui est destiné à limiter l'expansion radiale du joint 10.

La première lèvre est en outre de préférence conçue pour autoriser le déplacement radial centrifuge de la fenêtre d'échappement 20 par rapport au talon 11 lorsque ledit talon 11 se trouve en butée contre ledit élément de retenue 21.

En d'autres termes, l'appareil est de préférence agencé pour opposer un élément de retenue 21 au déplacement du talon 11 lorsque l'enceinte de cuisson se trouve sous pression, de sorte à contenir, voire empêcher l'expansion radiale centrifuge du talon 11 lorsque l'enceinte de cuisson se trouve sous pression, tout en autorisant un déplacement résiduel de la fenêtre d'échappement 20, par l'intermédiaire de la première lèvre 12, sensiblement selon une direction (Y₁Y₁') transverse à l'axe vertical (ZZ') et dans une direction qui tend à éloigner ladite fenêtre d'échappement dudit axe vertical.

De préférence, l'élément de retenue 21 forme une butée radiale située sensiblement dans le prolongement radial de la fenêtre d'échappement 20, et peut notamment être formé par le bord tombé 3D du couvercle 3, tel que cela est illustré sur les figures 3 et 4, la première lèvre 12 se déplaçant quant à elle au contact du bord de cuve 4.

Bien entendu, il est parfaitement envisageable que l'élément de retenue 21 soit au contraire ménagé sur la cuve 2 elle-même, par exemple dans un épaulement du rebord de cuve, tandis que la première lèvre 12 est destinée à venir en appui contre le couvercle.

Par ailleurs, le nombre, la disposition et la forme de la ou des fenêtres d'échappement 20 ne sont nullement limités à une variante de réalisation particulière.

Ainsi, on pourrait notamment envisager de réaliser la ou les fenêtres par une ou plusieurs perforations traversant le corps de la lèvre de part en part, depuis la face supérieure 17 jusqu'à sa face inférieure 18, lesdites perforations présentant une forme librement choisie et pouvant présenter un contour fermé.

Toutefois, de préférence, la ou les fenêtres d'échappement 20 sont formées chacune par une encoche qui s'ouvre à l'extrémité libre 15 de la première lèvre 12, et pourront, par simple commodité de description, être assimilées à de telles encoches dans ce qui suit.

De préférence, lesdites encoches 20 présentent un contour de découpe sensiblement en U.

Avantageusement, un tel format est particulièrement simple à réaliser. De surcroît, sa forme arrondie permet de limiter d'éventuelles concentrations de contraintes, et par conséquent les risques de déchirure, au creux des encoches.

De façon particulièrement préférentielle, la première lèvre 12 comporte une pluralité d'encoches 20 sensiblement identiques et équiréparties le long de son périmètre, tel que cela est illustré sur les figures 1 et 2.

Avantageusement, le déplacement différencié de la fenêtre d'échappement 20 par rapport au talon 11 intervient par déformation élastique de la première lèvre 12, ladite déformation résultant de préférence de l'application directe sur ladite première lèvre de la contrainte de pression régnant dans l'enceinte de cuisson 5.

A cet effet, la première lèvre 12 est de préférence réalisée dans un matériau élastomère, par exemple en silicone, ou en caoutchouc synthétique de type Nitrile Butadiène, le joint d'étanchéité 10 étant de façon particulièrement préférentielle formé dans son ensemble et d'un seul tenant dans ledit matériau élastomère.

Bien entendu, l'homme du métier sera à même d'apprécier la forme et les dimensions qu'il conviendra de conférer à la première lèvre 12 pour obtenir la flexibilité et l'amplitude de déplacement recherché relativement au talon 11, quel que soit par ailleurs le matériau retenu pour constituer le joint.

En particulier, les dimensions, et notamment l'épaisseur e de la première lèvre 12 seront de préférence choisies de telle sorte que ladite lèvre puisse s'incurver sous la pression un peu à la manière dont une voile se gonfle sous l'action du vent, de telle sorte que sa face supérieure 17 se recourbe sur elle-même tandis que sa face inférieure 18 se bombe en étant chassée radialement vers l'extérieur.

A titre d'exemple, ladite épaisseur e pourra être comprise entre 1 mm et 3 mm et de préférence voisine de 1,8 mm.

Par ailleurs, la longueur L de la première lèvre 12, mesurée entre la racine 14 et l'extrémité libre 15, sera de préférence sensiblement comprise entre 5 mm et 15 mm et de façon préférentielle voisine de 13 mm.

Selon l'invention, le déplacement utile de la fenêtre d'échappement 20 qui permet de faire passer le joint 10 de sa configuration d'étanchéité à sa configuration de fuite est porté au moins en partie, de préférence en majorité, voire exclusivement par la lèvre 12, et plus particulièrement par le phénomène de déformation élastique de ladite lèvre 12 sous l'effet de la pression régnant dans l'enceinte de cuisson 5.

A ce titre, la première lèvre 12 autorise de préférence à la fenêtre d'échappement 20 une course radiale C_{R} relativement au talon 11 qui est sensiblement comprise entre 3 mm et 8 mm, et par exemple voisine de 4,5 mm.

Plus particulièrement, cette course radiale C_{R} correspondra de préférence, tel que cela est illustré sur la figure 4, à la variation de distance à l'axe vertical (ZZ') de la paroi de fond 22 de l'encoche 20, ladite paroi de fond marquant la séparation entre le corps plein de la première lèvre 12 et le vide de ladite encoche 20, lorsque l'encoche 20 est déplacée sous l'action de la première lèvre 12 et que cette dernière passe d'une configuration étanche, ici sensiblement redressée et illustrée en trait pointillé sur la figure 4, à une configuration de fuite, ici incurvée et contractée sur elle-même, illustrée en trait plein sur cette même figure 4.

De surcroît, le joint d'étanchéité 10 est de préférence conçu pour que le contact entre la première lèvre 12 et le siège 16, et plus particulièrement entre la première lèvre et le rebord supérieur 4 de la cuve 2, se maintienne sensiblement dans un tronçon intermédiaire 23 de ladite première lèvre 12, ledit tronçon intermédiaire étant sensiblement compris entre 0,2 fois la longueur L et 0,7 fois la longueur L de ladite première lèvre, à partir de l'extrémité libre 15.

Avantageusement, une telle disposition constructive permet au joint 10 de venir au contact du siège 16, et plus particulièrement du rebord supérieur de cuve 4 sensiblement selon une bande annulaire de contact 23' qui est et reste située en vis-à-vis de la portion centrale du corps de la lèvre, aussi bien lors de la mise en place du couvercle sur la cuve que lors du passage du joint en configuration de fuite.

Ainsi, ladite première lèvre 12 dispose en quelque sorte de réserves de longueur lui permettant de se déplacer fonctionnellement, dans le sens de sa longueur L, par rapport au siège 16 sans perdre totalement le contact avec ce dernier, y compris lorsque le joint se trouve en configuration de fuite.

Plus particulièrement, il est ainsi possible de faire franchir au fond 22 de l'encoche 20 la ligne de crête 24 annulaire correspondant à l'ensemble des points culminants du rebord de cuve 4, de sorte à créer une fuite par-dessus ledit rebord, tout en maintenant les portions de la première lèvre 12 qui bordent latéralement ladite encoche 20 au contact du siège 16 contre le versant intérieur dudit rebord 4, en retrait de ladite ligne de crête 24.

Ainsi, les portions de la première lèvre 12 qui bordent latéralement la ou les encoches 20 forment avantageusement des bavettes de retenue apte à maintenir ladite première lèvre 12, et plus particulièrement son extrémité libre 15, à l'intérieur du périmètre défini par la ligne de crête 24, ce qui empêche tout basculement accidentel de l'extrémité libre 15 par-dessus le rebord 4 et évite toute extrusion du joint 10 et de la première lèvre 12 entre le couvercle et la cuve, par-dessus le rebord 4.

Une telle disposition confère à l'appareil, en cas de déclenchement de la fonction de sécurité du joint 10, un comportement particulièrement prévisible, progressif, sûr et non dommageable au joint.

De préférence, la ou les encoches 20 pénètrent dans la première lèvre sur une longueur d'environ 0,4 à 0,7 fois la longueur L de ladite première lèvre 12.

En particulier, les encoches 20 pourront ainsi présenter une profondeur A, séparant la paroi de fond 22 de l'extrémité libre 15, sensiblement comprise entre 5 mm et 9 mm, et par exemple voisine de 7 mm.

La largueur B desdites encoches 20 pourra quant à elle être sensiblement comprise entre 2 mm et 8 mm, et par exemple voisine de 6 mm.

Bien entendu, l'homme du métier sera à même d'apprécier les dimensions des fenêtres d'échappement 20, et notamment la profondeur des encoches, eu égard à la longueur de la lèvre et à la géométrie du rebord de cuve 4 de telle sorte que le joint d'étanchéité 10 puisse d'une part assurer une étanchéité convenable de l'enceinte de cuisson 5 en conditions normales de fonctionnement et d'autre part déclencher, avantageusement à travers les seules fenêtres d'échappement 20, une fuite de sécurité suffisante en cas de surpression excessive au regard du seuil Ps prédéterminé.

A ce titre, il est bien entendu que d'autres proportions et géométrie que celles illustrées sur les figures pourront être envisagées.

Bien qu'il ne soit pas exclu que le pourtour radial externe 11E du talon 11 puisse comporter un ou plusieurs renfoncements ou découpes, ledit pourtour radial externe 11E est de préférence sensiblement, voire totalement, dépourvu de renfoncements au droit de la ou des fenêtre(s) d'échappement 20.

Avantageusement, le déplacement de la fenêtre d'échappement 20 étant assuré par la première lèvre 12, il n'est en effet plus nécessaire de déformer le talon 11 lui-même pour faire passer le joint 10 de sa configuration d'étanchéité à sa configuration de fuite.

Par conséquent, il n'est pas nécessaire de prévoir des zones de dégagement et de déformation au niveau du talon lui-même, ce qui permet avantageusement de conserver sensiblement audit talon sa forme convexe, régulière et exempte d'évidements, de méplats ou de découpes concaves.

Avantageusement, en maintenant un talon 11 sensiblement plein et d'épaisseur sensiblement constante sur tout son pourtour, on évite de créer des zones d'affaiblissement du joint, lequel est par conséquent plus robuste.

En outre, un tel talon 11 peut avantageusement former une sorte de cerclage de diamètre sensiblement constant, apte à venir en appui sensiblement continu, régulier et homogène, contre l'élément de retenue 21, et plus particulièrement contre le bord tombé 3D du couvercle 3, et ce y compris au repos lorsque la pression régnant dans l'enceinte de cuisson est inférieure au seuil de sécurité P_{S}, ce qui assure son positionnement convenable et sa bonne tenue au sein du couvercle.

Par ailleurs, le talon 11 peut avantageusement se prolonger par une excroissance de centrage 25, sensiblement verticale, qui est destinée à venir s'intercaler entre la partie latérale externe du rebord de cuve 4 et la face latérale interne du bord tombé 3D afin de garantir le centrage du couvercle 3 sur la cuve 2.

De préférence, ladite excroissance de centrage 25 forme une couronne qui est pourvue d'une pluralité de bossages 25' faisant saillie radiale centripète sur ladite couronne et qui sont destinés à fournir une pluralité de points d'appui contre le rebord de cuve, espacés les uns des autres. Ainsi, le centrage s'effectue avantageusement de manière ponctuelle au niveau desdits bossages 25' plutôt que de manière continue sur toute la surface radialement interne de l'excroissance de centrage 25.

De préférence, le joint d'étanchéité 10 présente en outre une zone de dégagement 26 située dans le creux compris entre l'excroissance de centrage 25 et la première lèvre 12.

Avantageusement, une telle zone de dégagement 26 peut servir non seulement au centrage du couvercle sur la cuve, en accueillant le rebord de cuve 4 lorsque le joint vient coiffer ce dernier de manière chevauchante, mais également fournir une zone d'accueil à la matière constitutive de la première lèvre 12, lorsque ladite lèvre se déporte vers l'extérieur tandis qu'elle est chassée et déformée sous l'effet de la pression, la zone de dégagement 26 libérant ainsi un espace nécessaire au débattement de ladite première lèvre 12 et au déplacement de la fenêtre d'échappement 20.

A ce titre, la première lèvre 12 présente de préférence, au moins lorsque le joint 10 se trouve au repos, une structure sensiblement plane qui est inclinée, vers le bas sur les figures 3 et 4, d'un angle d'ouverture α sensiblement compris entre 20 degrés et 50 degrés, et préférentiellement voisin de 35 degrés, par rapport au plan horizontal du joint P1, lui-même sensiblement parallèle au plan de travail P₀.

Avantageusement, tel que cela est illustré sur la figure 2, chaque encoche 20 peut par ailleurs être située dans un secteur angulaire correspondant à la portée séparant deux bossages 25' successifs, et notamment sensiblement centrée dans ledit secteur angulaire.

Ainsi, une fois le joint en place, chaque encoche se trouve radialement en vis-à-vis d'un secteur angulaire dudit joint dans lequel la surface radialement interne de l'excroissance de centrage 25, soutenue par ses bossages 25' qui agissent comme des entretoises, est sensiblement décollée du rebord de cuve et maintenue à distance de ce dernier, ce qui d'une part maximise l'espace disponible offert par la zone de dégagement 26 au droit de ladite encoche, et d'autre part contribue à ménager un passage de fuite disponible entre la face inférieure 18 de la lèvre 12 l'extérieur.

Par ailleurs, le joint d'étanchéité comprend de préférence une seconde lèvre 30 qui fait saillie à partir du talon 11, ladite seconde lèvre 30 étant plus rigide et plus courte que la première lèvre 12. De préférence, ladite seconde lèvre 30 est destinée à venir en appui étanche contre un élément opposé à celui sur lequel vient reposer la première lèvre 12, et plus particulièrement contre le couvercle.

A cet effet, ladite seconde lèvre 30 peut être pourvue d'un bourrelet terminal 31 qui vient s'écraser contre le plat annulaire 3C.

Le joint d'étanchéité 10 présente ainsi de préférence une section transverse sensiblement divergente en V, les première et seconde lèvres étant superposées, du même côté du talon, selon une structure sensiblement asymétrique.

De façon particulièrement préférentielle, la seconde lèvre 30 est pleine, et totalement dépourvue d'encoche ou de fenêtre d'échappement.

Avantageusement, la structure asymétrique, ainsi que la rigidité supérieure de la seconde lèvre 30, permettent de signaler à l'utilisateur distrait un montage défectueux du joint.

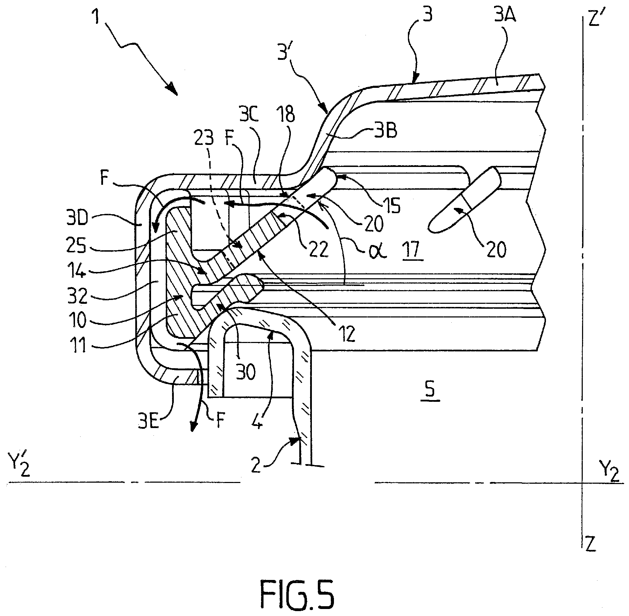

En effet, si le joint 10 est monté à l'envers, la seconde lèvre 30 se trouve disposée de telle sorte qu'elle exerce une résistance particulièrement élevée **au** rapprochement du couvercle et de la cuve, tel que cela est illustré sur la figure 5.

De surcroît, selon une caractéristique qui peut constituer une invention en tant que telle, la ou les fenêtre(s) d'échappement 20 sont disposées de sorte à pouvoir coopérer avec le couvercle 3, ou respectivement la cuve 2, lorsque le joint 10 est monté à l'envers dans l'appareil 1, afin de former un orifice de fuite permanent entre l'enceinte de cuisson 5 et l'extérieur de l'appareil, tel que cela est illustré sur la figure 5.

En d'autres termes, il est possible d'utiliser un même moyen, à savoir la fenêtre d'échappement 20 ménagée sur une lèvre du joint, pour réaliser deux fonctions distinctes de sécurité, et plus précisément pour d'une part, selon une première fonction, créer un orifice de fuite permanent empêchant la montée en pression de l'appareil de cuisson 1 en cas de montage à l'envers du joint 10 et, d'autre part, selon une seconde fonction, lorsque ledit joint 10 est monté à l'endroit, permettre le passage dudit joint 10 d'une configuration d'étanchéité à une configuration de fuite en créant un orifice de fuite temporaire lorsque la pression régnant dans l'enceinte de cuisson dépasse un seuil critique P_{S}.

A cet effet, la profondeur de l'encoche 20, de même que l'angle d'ouverture α de la première lèvre 12, sont choisis de telle sorte que, lorsque le joint est monté à l'envers, la première lèvre 12 vient en appui contre le couvercle 3 en créant, à travers l'encoche 20, un passage permanent entre la paroi interne du couvercle et la paroi de fond 22 de ladite encoche.

Avantageusement, tel que cela est illustré sur les figures 1 et 5, des évidements d'évacuation 32 peuvent être creusés dans le pourtour externe 11E du talon sur toute sa hauteur, ainsi que sur les chants inférieur et supérieur dudit talon, de sorte à créer des passages de fuite entre le talon 11 et le couvercle 3, et plus particulièrement entre le talon 11 et le plat annulaire 3C puis le bord tombé 3D.

Ainsi, lorsque le joint est monté à l'envers, l'enceinte de cuisson communique avantageusement avec l'extérieur de l'appareil 1 par un passage de fuite supérieur qui longe sensiblement la paroi interne du couvercle 3 et autorise la fuite permanente d'un flux de vapeur F qui empêche la montée en pression de l'appareil.

Le fonctionnement d'un appareil de cuisson 1 conforme à l'invention va maintenant être décrit en référence à la variante de réalisation préférentielle illustrée sur les figures 3 et 4.

Le joint d'étanchéité 10 est tout d'abord mis en place au sein du couvercle 3, de telle sorte que son pourtour radial externe 11E vienne se plaquer contre la face interne du bord tombé 3D tandis que le bourrelet 31 de la seconde lèvre 30 vient en appui contre le plat annulaire 3C. De préférence, le talon 11 occupe par rapport au couvercle 3 une position radialement et axialement fixe qu'il conservera sensiblement tout au long du cycle normal de cuisson, ainsi que lors du passage en configuration de fuite.

Le couvercle est alors rapporté sur la cuve 2, sensiblement selon un mouvement d'approche axial descendant, jusqu'à ce que la première lèvre 12 entre en contact avec le rebord supérieur 4 de la cuve 2, sensiblement selon une bande de contact 23' annulaire localisée au niveau du tronçon intermédiaire 23 de la première lèvre 12.

Le joint d'étanchéité 10 crée ainsi, respectivement au moyen de sa première lèvre 12 et de sa seconde lèvre 30, une première couronne d'étanchéité inférieure contre le siège 16, ici situé sur la cuve, et une seconde couronne d'étanchéité contre le couvercle 3, au niveau du bourrelet terminal 31.

Avantageusement, la première lèvre 12 vient coiffer le rebord supérieur de cuve, le joint 10 chevauchant ledit rebord supérieur 4 de telle sorte que l'extrémité libre 15 de la première lèvre 12 pénètre progressivement à l'intérieur de la cuve tandis que l'excroissance de centrage 25 reste à l'extérieur, au-delà du rebord supérieur de cuve, entre ledit rebord supérieur et le bord tombé 3D du couvercle, ce qui assure le centrage et la stabilité du couvercle sur la cuve.

L'utilisateur verrouille alors le couvercle sur la cuve en actionnant les moyens de verrouillage 6, et plus particulièrement en rapprochant radialement les mâchoires 7 de sorte à les engager en prise sous le rebord supérieur de cuve 4, tel que cela est illustré sur la figure 3.

Le joint 10 se trouve alors dans une configuration d'étanchéité dans laquelle il empêche la communication entre l'enceinte de cuisson 5 et l'extérieur de l'appareil.

L'appareil de cuisson 1 étant placé sur une source de chauffe, la pression régnant dans ladite enceinte de cuisson 5 peut alors s'élever progressivement jusqu'à atteindre une valeur normale de fonctionnement.

Avantageusement, l'appareil est pourvu d'un ou plusieurs organes de régulation, tels que des soupapes tarées, permettant de réguler cette pression de fonctionnement.

Tant que la pression régnant dans l'enceinte de cuisson reste inférieure au seuil de sécurité Pₛ, le joint 10 maintient un contact étanche avec le siège 16.

Plus particulièrement, tel que cela est illustré sur la figure 3, la bande de contact 23' s'étend en amont de la première lèvre 12, au niveau d'une portion pleine du tronçon intermédiaire 23 comprise entre la racine 14 et ladite paroi de fond 22 de l'encoche 20.

Le contact entre la première lèvre 12 et le siège 16 est ainsi continûment assuré de manière étanche sur tout le pourtour dudit siège 16, tandis que la partie évidée de la fenêtre d'échappement 20 est suspendue à l'intérieur du périmètre d'étanchéité que définit ladite bande de contact 23'.

Plus la pression augmente à l'intérieur de l'enceinte de cuisson 5, plus la première lèvre 12 est contrainte et subit une déformation élastique importante.

Plus particulièrement, la pression interne tend à forcer une certaine expansion du diamètre du joint 10, dont le talon reste toutefois sensiblement contenu par l'élément de retenue 21, de telle sorte que la première lèvre, qui reste libre de se déformer, tend à être repoussée de façon radiale centrifuge en subissant au niveau de sa racine 14 une flexion qui tend à venir plaquer sa face inférieure 18 contre la surface radiale interne du talon, et plus particulièrement contre la face interne de l'excroissance de centrage 25.

Ladite première lèvre 12 tend ainsi à s'immiscer dans la zone de dégagement 26 en se déportant vers l'extérieur, ce déplacement s'accompagnant d'une flexion de ladite première lèvre 12 sur elle-même, sa face supérieure 17 se repliant sur elle-même pour passer progressivement d'une forme sensiblement plane, illustrée en trait pointillé sur la figure 4, à une forme sensiblement concave, illustrée en trait plein sur la figure 4. Plus particulièrement, ce comportement résulte ici de l'action combinée de la pression régnant dans l'enceinte de cuisson, ladite pression forçant la première lèvre à fléchir localement, au niveau de la racine 14, en augmentant son angle d'ouverture α, et du rebord supérieur 4 de la cuve qui tend à assurer sensiblement une retenue verticale et un guidage de l'extrémité libre de ladite lèvre.

Au fur et à mesure que la portion de la première lèvre 12 située à proximité de la racine 14 est rabattue vers l'extérieur, contre le talon, celle-ci entraîne à sa suite l'extrémité libre 15, et par conséquent l'encoche 20, dans un mouvement de déport comprenant une composante radiale centrifuge.

Par ailleurs, il est remarquable que, dans le cas d'un appareil de cuisson dont la fermeture est assurée par des mâchoires 7, le couvercle 3 peut subir, sous l'effet de la pression, une certaine déformation dans les secteurs angulaires non couverts par les mâchoires 7, ici sensiblement selon un mouvement axial ascendant, de telle sorte que le joint 10, et plus particulièrement son talon 11, suit sensiblement ledit mouvement de soulèvement. Le déplacement de l'encoche 20 peut ainsi également comporter, notamment en combinaison avec sa composante radiale, une composante axiale utile favorisant l'ouverture d'un orifice de fuite.

En d'autres termes, le couvercle 3 peut être maintenu sur la cuve 2 par des moyens de verrouillage 6 espacés, tels que des mâchoires 7, ledit couvercle 3 présentant, entre lesdits moyens de verrouillage, une ou plusieurs portions dégagées 3', le joint d'étanchéité 10 étant placé de manière à ce qu'au moins une fenêtre d'échappement 20 se situe sensiblement à l'aplomb de l'une desdites portions dégagées 3', de telle sorte que la déformation de la portion dégagée 3' correspondante sous l'effet de la pression régnant dans l'enceinte de cuisson contribue au déplacement utile de ladite fenêtre d'échappement 20 permettant d'ouvrir un orifice de fuite lorsque ladite pression dépasse un seuil prédéterminé P_{S}.

Plus globalement, selon une caractéristique préférentielle qui peut constituer une invention à part entière, le couvercle 3 peut ainsi présenter une ou plusieurs portions dégagées 3' sensiblement mobiles ou déformables sous l'effet de la pression, lesdites portions dégagées correspondant par exemple aux secteurs angulaires compris entre deux mâchoires 7 successives, tandis que le joint 10 est placé de manière à ce qu'au moins une fenêtre d'échappement 20 se situe sensiblement sous l'une desdites portions dégagées 3', de telle sorte que le changement global de position de la ou des fenêtres d'échappement 20 par rapport au siège 16, lequel permet la formation du ou des orifices de fuite, résulte au moins en partie, sinon en totalité, du mouvement du couvercle 3, ou encore de la combinaison des mouvements respectifs du couvercle et de la première lèvre 12.

Si la pression régnant dans l'enceinte de cuisson est suffisamment élevée, et en l'occurrence si elle atteint et dépasse le seuil de sécurité Pₛ, le déplacement et la déformation de la première lèvre 12, et plus particulièrement le glissement de sa face inférieure 18 le long du rebord 4 au contact de ce dernier, sont d'amplitude suffisante pour que ladite face inférieure 18 se dégage et se décolle progressivement dudit bord de cuve jusqu'à perdre le contact avec ce dernier en vis-à-vis de ladite encoche 20, ce qui crée un orifice de fuite au niveau de ladite encoche 20, et permet ainsi l'apparition d'un débit de fuite F qui évacue la surpression de l'enceinte de cuisson 5.

En d'autres termes, si l'on considère le comportement du joint dans un plan de coupe radial vertical P2, on observe que, tandis que le talon 11 du joint est retenu en position radiale sensiblement fixe dans le prolongement radial de la première lèvre 12, la déformation de ladite première lèvre 12 au droit dudit talon 11 autorise un mouvement relatif de l'encoche 20 par rapport à ce dernier dont l'amplitude et la trajectoire sont suffisantes pour faire migrer la bande de contact 23' de la zone pleine de la première lèvre 12, située en amont de la paroi de fond 22 de l'encoche, jusqu'à la zone évidée située en aval de cette dernière, entre la paroi de fond 22 et l'extrémité libre 15.

Ainsi, cette migration de la fenêtre d'échappement 20, et plus particulièrement de la paroi de fond 22, relativement au siège 16 a pour effet de faire « *reculer* », ou « *d'abaisser* » la bande de contact 23' par rapport à la première lèvre 12, en direction de l'extrémité libre 15, ce qui a pour conséquence de découvrir progressivement la ou les fenêtres d'échappement 20, le rebord de cuve se comportant à leur égard un peu à la manière d'un volet obturateur coulissant sur une fenêtre à guillotine.

Cette ouverture progressive de la ou des fenêtre d'échappement 20 sur l'extérieur de l'appareil interrompt localement la continuité initiale de ladite bande de contact 23', en mettant ainsi en communication l'enceinte de cuisson 5 avec l'environnement dudit appareil. De préférence, cette mise en communication s'opère dans les zones dégagées du couvercle, et par exemple dans les zones non recouvertes par les mâchoires 7, de sorte à autoriser la diffusion du flux de vapeur F vers le bas de l'appareil.

A ce titre, il est remarquable que le joint 10 conforme à l'invention permet d'ouvrir progressivement un ou plusieurs orifices de fuite, en dégageant graduellement, en fonction de la pression régnant dans la cuve, les fenêtres d'échappement 20 du siège 16 qui les obstrue et/ou les recouvre initialement.

Avantageusement, cet accroissement progressif de la section de passage utile des fenêtres d'échappement 20 permet d'obtenir un débit de fuite contrôlé, adapté et de préférence sensiblement proportionnel au niveau de surpression rencontrée. Le caractère progressif de l'ouverture est avantageusement renforcé par le profil incurvé de la découpe délimitant le fond 22 des encoches 20.

Par ailleurs, tout au long de la déformation de la première lèvre 12, ladite lèvre conserve avantageusement le contact avec le bord de cuve, les « bavettes » bordant latéralement chaque encoche 20 conservant le contact avec le siège 16, et plus particulièrement restant en retrait de la ligne de crête 24.

Ainsi, le rebord de la cuve chevauche toujours au moins en partie la base de chaque encoche 20, de telle sorte que l'extrémité libre 15 de la lèvre ne franchit pas la ligne de crête 24, même lorsque le joint 10 se trouve en configuration de fuite. Une telle disposition empêche le joint 10, et plus particulièrement la première lèvre 12, d'être localement extrudé en basculant par-dessus le rebord de cuve 4.

Avantageusement, en autorisant ainsi un déplacement contrôlé de la lèvre et de la fenêtre d'échappement 20 juste nécessaire et suffisant pour provoquer l'ouverture d'un ou plusieurs orifices de fuites aptes à évacuer la surpression, mais suffisamment restreint pour empêcher l'extrémité libre 15 de la première lèvre d'être expulsée par-dessus le rebord de cuve, on préserve le guidage dudit joint et on évite un endommagement irréversible de ce dernier.

Ainsi, le comportement du joint d'étanchéité en cas de déclenchement de sécurité est avantageusement réversible, puisque la première lèvre 12 conserve son guidage contre le rebord de cuve 4, que les fenêtres d'échappement 20 soient obstruées ou dégagées par ledit rebord de cuve.

Par ailleurs, la multiplicité des fenêtres d'échappement 20 et la forme de révolution régulière du joint autorisent avantageusement le montage simple et intuitif dudit joint 10 au sein du couvercle 3, sans considération d'orientation particulière par rapport au couvercle ou à la cuve, et ce sans nuire à la sécurité de fonctionnement ou à la longévité de l'appareil.

En outre, la déformation nécessaire au fonctionnement de sécurité du joint 10 conforme à l'invention est avantageusement supportée par un organe, en l'occurrence la première lèvre 12, qui est particulièrement souple, résistant aux contraintes alternées, et sur lequel les contraintes de déformation sont réparties de façon relativement homogène, ce qui limite considérablement le risque d'un endommagement localisé voire d'une rupture.

A ce titre, il est remarquable que la déformation fonctionnelle du joint 10 s'opère sensiblement de manière répartie et équilibrée sur la plus grande dimension dudit joint, à savoir son périmètre, et plus particulièrement, dans chaque plan vertical contenant l'axe (ZZ'), par flexion du joint autour d'un axe de flexion sensiblement horizontal, donc perpendiculaire à l'axe (ZZ'), et tangent au cercle générateur de la première lèvre 12, contrairement à ce qui se produit sur les joints connus, dans lesquels on force la flexion du joint dans un plan horizontal autour d'un axe sensiblement vertical et parallèle à l'axe (ZZ'), en provoquant localement une sévère concentration de contraintes.

Par ailleurs, la simplicité de fonctionnement du joint 10 ne nécessite avantageusement aucun aménagement complexe du couvercle ou de la cuve, et permet en particulier de ne pas avoir à percer de fenêtre d'extrusion du joint, ni de rogner le couvercle et/ou la cuve pour y ménager des orifices de fuite particuliers.

En effet, les surpressions peuvent avantageusement être évacuées sensiblement sur tout le pourtour du couvercle, la zone de dégagement 26 formant en pratique un collecteur d'évacuation apte à collecter le flux de vapeur F de fuite issu d'une quelconque des fenêtres d'échappement 20, et à évacuer ce flux gazeux par tout interstice créé par le jeu existant entre le bord roulé du couvercle 3E et le rebord de cuve 4 et faisant communiquer librement la zone de dégagement 26 avec l'extérieur de l'appareil.

### POSSIBILITE D'APPLICATION INDUSTRIELLE

La présente invention trouve notamment son application dans la réalisation d'appareils de cuisson d'aliments sous pression et la fabrication de joints pour de tels appareils.

## Revendications

1. Joint d'étanchéité (10) pour appareil de cuisson (1) d'aliments sous pression, ledit appareil comprenant une cuve (2) ainsi qu'un couvercle (3) destiné à être rapporté sur ladite cuve (2) pour définir une enceinte de cuisson (5), ledit joint étant conçu pour être interposé entre le couvercle et la cuve afin d'assurer l'étanchéité de ladite enceinte de cuisson, ledit joint comportant un talon (11) à partir duquel fait saillie au moins une première lèvre (12) percée d'au moins une fenêtre d'échappement (20) qui la traverse selon son épaisseur (e), le talon (11) entourant la première lèvre (12) à sa périphérie, ledit joint étant **caractérisé en ce que** le pourtour radial externe (11E) dudit talon (11) est sensiblement dépourvu de renfoncements au droit de la ou des fenêtres d'échappement (20) et **en ce que** ladite première lèvre (12) forme un organe de déplacement différentiel conçu pour permettre à la fenêtre d'échappement (20) d'opérer, lorsque la pression régnant dans l'enceinte de cuisson (5) dépasse un seuil prédéterminé (Ps), un déplacement relatif par rapport au talon (11) lorsque ce dernier est retenu en position radiale sensiblement fixe dans le prolongement radial de la première lèvre (12), ledit déplacement permettant à ladite fenêtre d'échappement (20) d'ouvrir un orifice de fuite par l'intermédiaire duquel l'enceinte de cuisson (5) est mise en communication avec l'extérieur de l'appareil (1).

2. Joint selon la revendication 1 **caractérisé en ce que** le talon (11) est agencé pour venir en butée contre un élément de retenue (21) appartenant à la cuve (2) ou au couvercle (3) et destiné à limiter l'expansion radiale dudit joint, et **en ce que** la première lèvre (12) est conçue pour autoriser le déplacement radial centrifuge de la fenêtre d'échappement (20) par rapport au talon lorsque ledit talon (11) se trouve en butée contre l'élément de retenue.

3. Joint selon la revendication 1 ou 2 **caractérisé en ce que** la première lèvre (12) autorise à la fenêtre d'échappement (20) une course radiale (C_{R}) relativement au talon (11) qui est sensiblement comprise entre 3 mm et 8 mm.

4. Joint selon l'une des revendications précédentes **caractérisé en ce que** la première lèvre (12) présente une longueur L entre son extrémité libre (15) et la racine (14) qui la relie au talon (11), et **en ce que** ledit joint (10) est conçu pour que le contact entre la lèvre et le rebord supérieur (4) de la cuve (2) se maintienne sensiblement dans un tronçon intermédiaire (23) de ladite lèvre sensiblement compris entre 0,2*L et 0,7*L à partir de l'extrémité libre (15).

5. Joint selon l'une des revendications précédentes **caractérisé en ce que** la première lèvre présente une longueur L, mesurée entre sa racine (14) et son extrémité libre (15) opposée, sensiblement comprise entre 5 mm et 15 mm, et de préférence voisine de 13 mm.

6. Joint selon l'une des revendications précédentes **caractérisé en ce que** l'au moins une fenêtre d'échappement (20) est formée par une encoche qui s'ouvre à l'extrémité libre (15) de la première lèvre (12).

7. Joint selon la revendication 6 **caractérisé en ce que**, la première lèvre (12) présentant une longueur L entre son extrémité libre (15) et la racine (14) qui la relie au talon, l'encoche pénètre dans la première lèvre sur environ 0,4*L à 0,7*L.

8. Joint selon l'une des revendications précédentes **caractérisé en ce que** la première lèvre (12) est réalisée dans un matériau élastomère, par exemple en silicone ou en caoutchouc synthétique, et présente une épaisseur (e) sensiblement comprise entre 1 et 3 mm, et de préférence voisine de 1,8 mm.

9. Joint selon l'une des revendications précédentes **caractérisé en ce qu'**il comprend une seconde lèvre (30) faisant saillie à partir du talon (11), ladite seconde lèvre (30) étant plus rigide et plus courte que la première lèvre (12).

10. Joint selon l'une des revendications précédentes **caractérisé en ce que** la fenêtre d'échappement (20) est disposée de sorte à pouvoir coopérer avec le couvercle (3) ou la cuve (2), lorsque le joint (10) est monté à l'envers dans l'appareil (1), afin de former un orifice de fuite permanent.

11. Appareil de cuisson (1) d'aliments sous pression **caractérisé en ce qu'**il est pourvu d'un joint d'étanchéité (10) conforme à l'une des revendications 1 à 10.

12. Appareil de cuisson (1) d'aliments sous pression selon la revendication 11 **caractérisé en ce qu'**il comporte un couvercle (3) maintenu sur une cuve (2) par des moyens de verrouillage (6) espacés, tels que des mâchoires (7), ledit couvercle (3) présentant, entre lesdits moyens de verrouillage, une ou plusieurs portions dégagées (3'), et **en ce que** le joint d'étanchéité (10) est placé de manière à ce qu'au moins une fenêtre d'échappement (20) se situe sensiblement à l'aplomb de l'une desdites portions dégagées (3'), de telle sorte que la déformation de la portion dégagée (3') correspondante sous l'effet de la pression régnant dans l'enceinte de cuisson contribue au déplacement utile de ladite fenêtre d'échappement (20) permettant d'ouvrir un orifice de fuite lorsque ladite pression dépasse un seuil prédéterminé (Ps).

## Patentansprüche

1. Dichtung (10) für einen Druckkochgerät (1), wobei das Gerät eine Wanne (2) sowie einen Deckel (3) umfasst, der dazu bestimmt ist, auf die Wanne (2) aufgesetzt zu werden, um einen Kochraum (5) zu definieren, wobei die Dichtung eingerichtet ist, um zwischen den Deckel und die Wanne gesetzt zu werden, um die Dichtigkeit des Kochraums zu gewährleisten, wobei die Dichtung einen Absatz (11) umfasst, aus dem mindestens eine erste Lippe (12) herausragt, die mit mindestens einer Ablassöffnung (20) durchbohrt ist, die sie in ihrer Dicke (e) durchquert, wobei der Absatz (11) die erste Lippe (12) an ihrer Peripherie umgibt, wobei die Dichtung **dadurch gekennzeichnet ist, dass** der äußere radiale Umfang (11E) des Absatzes (11) im Wesentlichen keine Vertiefungen im rechten Winkel zu der oder den Ablassöffnungen (20) aufweist, und dass die erste Lippe (12) ein Differentialverlagerungselement bildet, das eingerichtet ist, um es der Ablassöffnung (20) zu ermöglichen, wenn der in dem Kochraum (5) herrschende Druck einen vorbestimmten Grenzwert (Pₛ) überschreitet, eine relative Verlagerung in Bezug zum Absatz (11) vorzunehmen, wenn dieser letztgenannte in radialer im Wesentlichen fester Position in der radialen Verlängerung der ersten Lippe (12) gehalten wird, wobei es die Verlagerung der Ablassöffnung (20) ermöglicht, einem Leckspalt zu öffnen, durch den der Kochraum (5) mit dem Äußeren des Geräts (1) in Verbindung gebracht wird.

2. Dichtung nach Anspruch 1, **dadurch gekennzeichnet, dass** der Absatz (11) angeordnet ist, um an einem Halteelement (21), das zu der Wanne (2) oder zu dem Deckel (3) gehört, zum Anschlag zu gelangen, und dazu bestimmt ist, die radiale Ausdehnung der Dichtung zu begrenzen, und dass die erste Lippe (12) eingerichtet ist, um die radiale Zentrifugalverlagerung der Ablassöffnung (20) in Bezug zum Absatz zu gestatten, wenn sich der Absatz (11) an dem Halteelement am Anschlag befindet.

3. Dichtung nach Anspruch 1 oder 2, **dadurch gekennzeichnet, dass** die erste Lippe (12) der Ablassöffnung (20) einen radialen Weg (CR) in Bezug zum Absatz (11) erlaubt, der im Wesentlichen zwischen 3 mm und 8 mm beträgt.

4. Dichtung nach einem der vorhergehenden Ansprüche, **dadurch gekennzeichnet, dass** die erste Lippe (12) eine Länge L zwischen ihrem freien Ende (15) und dem Ansatz (14), der sie mit dem Absatz (11) verbindet, aufweist, und dass die Dichtung (10) eingerichtet ist, damit der Kontakt zwischen der Lippe und dem oberen Rand (4) der Wanne (2) im Wesentlichen in einem Zwischenabschnitt (23) der Lippe im Wesentlichen zwischen 0,2*L und 0,7*L vom freien Ende (15) aus gehalten wird.

5. Dichtung nach einem der vorhergehenden Ansprüche, **dadurch gekennzeichnet, dass** die erste Lippe eine Länge L, gemessen zwischen ihrem Ansatz (14) und ihrem gegenüberliegenden freien Ende (15), im Wesentlichen zwischen 5 mm und 15 mm und vorzugsweise nahe 13 mm aufweist.

6. Dichtung nach einem der vorhergehenden Ansprüche, **dadurch gekennzeichnet, dass** die mindestens eine Ablassöffnung (20) von einer Kerbe gebildet ist, die sich am freien Ende (15) der ersten Lippe (12) öffnet.

7. Dichtung nach Anspruch 6, **dadurch gekennzeichnet, dass** die erste Lippe (12) eine Länge L zwischen ihrem freien Ende (15) und dem Ansatz (14) aufweist, der sie mit dem Absatz verbindet, wobei die Kerbe in die erste Lippe auf ungefähr 0,4*L bis 0,7*L eindringt.

8. Dichtung nach einem der vorhergehenden Ansprüche, **dadurch gekennzeichnet, dass** die erste Lippe (12) aus einem Elastomermaterial, beispielsweise aus Silikon oder synthetischem Kautschuk, hergestellt ist und eine Dicke (e) im Wesentlichen zwischen 1 und 3 mm und vorzugsweise nahe 1,8 mm aufweist.

9. Dichtung nach einem der vorhergehenden Ansprüche, **dadurch gekennzeichnet, dass** sie eine zweite Lippe (30) umfasst, die aus dem Absatz (11) herausragt, wobei die zweite Lippe (30) steifer und kürzer als die erste Lippe (12) ist.

10. Dichtung nach einem der vorhergehenden Ansprüche, **dadurch gekennzeichnet, dass** die Ablassöffnung (20) derart angeordnet ist, dass sie mit dem Deckel (3) oder der Wanne (2) zusammenwirken kann, wenn die Dichtung (10) umgekehrt in dem Gerät (1) montiert ist, um einen permanenten Leckspalt zu bilden.

11. Druckkochgerät (1), **dadurch gekennzeichnet, dass** es mit einer Dichtung (10) nach einem der Ansprüche 1 bis 10 versehen ist.

12. Druckkochgerät (1) nach Anspruch 11, **dadurch gekennzeichnet, dass** es einen Deckel (3) umfasst, der auf einer Wanne (2) durch beabstandete Verriegelungsmittel (6), wie Klemmbacken (7) gehalten wird, wobei der Deckel (3) zwischen den Verriegelungsmitteln einen oder mehrere frei gelassene Abschnitte (3') aufweist, und dass die Dichtung (10) derart angeordnet ist, dass mindestens eine Ablassöffnung (20) im Wesentlichen senkrecht auf einem der frei gelassenen Abschnitte (3') angeordnet ist, so dass die Verformung des entsprechenden frei gelassenen Abschnitts (3') unter der Wirkung des in dem Kochraum herrschenden Drucks zur geeigneten Verlagerung der Ablassöffnung (20) beiträgt, wodurch es ermöglicht wird, einen Leckspalt zu öffnen, wenn der Druck einen vorbestimmten Grenzwert (Ps) überschreitet.

## Claims

1. A sealing gasket (10) for a cooking utensil (1) for cooking food under pressure, said utensil comprising a vessel (2) and a lid (3) designed to be mounted on said vessel (2) to define a cooking enclosure (5), said gasket being designed to be interposed between the lid and the vessel in order to seal said cooking enclosure, said gasket having a heel (11) from which at least a first lip (12) projects, the first lip (12) being provided with at least one escape window (20) that passes through its thickness (e), the heel (11) surrounding the first lip (12) at its periphery, said gasket being **characterized in that** the radially outside periphery (11E) of said heel (11) is substantially exempt from reinforcements in register with the escape window(s) (20) and **in that** said first lip (12) forms a differential movement member designed to enable, when the pressure prevailing inside the cooking enclosure (5) exceeds a predetermined threshold (Ps), the escape window(s) (20) to effect a relative movement relative to the heel (11) when the latter is retained in a substantially stationary radial position in radial alignment with the first lip (12), said relative movement enabling said escape window (20) to open up a leakage orifice via which the cooking enclosure (5) is put into communication with the outside of the utensil (1).

2. A gasket according to claim 1, **characterized in that** the heel (11) is arranged to come into abutment against a retaining element (21) belonging to the vessel (2) or to the lid (3) and designed to limit the radial expansion of said gasket, and **in that** the first lip (12) is designed to allow the escape window (20) to move radially outwards relative to the heel when said heel (11) finds itself in abutment against the retaining element.

3. A gasket according to claim 1 or claim 2, **characterized in that** the first lip (12) allows the escape window (20) to travel over a radial stroke (C_{R}) relative to the heel (11) that substantially lies in the range 3 mm to 8 mm.

4. A gasket according to any preceding claim, **characterized in that** the first lip (12) has a length L between its free end (15) and the root (14) that connects it to the heel (11), and **in that** said gasket (10) is designed so that the contact between the lip and the top rim (4) of the vessel (2) is maintained substantially in an intermediate segment (23) of said lip, the distance of the intermediate segment from the free end (15) substantially lying in the range 0.2 × L to 0.7 × L.

5. A gasket according to any preceding claim, **characterized in that** the first lip has a length L, as measured between its root (14) and its opposite free end (15), substantially lying in the range 5 mm to 15 mm, and preferably lying in the vicinity
of 13 mm.

6. A gasket according to any preceding claim, **characterized in that** the at least one escape window (20) is formed by a notch that opens out in the free end (15) of the first lip (12).

7. A gasket according to claim 6, **characterized in that**, with the first lip (12) having a length L between its free end (15) and the root (14) that connects it to the heel, the notch penetrates into the first lip over a length lying approximately in the
range 0.4 × L to 0.7 × L.

8. A gasket according to any preceding claim, **characterized in that** the first lip (12) is made of an elastomer material, e.g. of silicone or of synthetic rubber, and has a thickness (e) substantially lying in the range 1 mm to 3 mm, and preferably lying in the vicinity of 1.8 mm.

9. A gasket according to any preceding claim, **characterized in that** it has a second lip (30) projecting from the heel (11), said second lip (30) being stiffer and shorter than the first lip (12).

10. A gasket according to any preceding claim, **characterized in that** the escape window (20) is disposed in such a manner as to be able to co-operate with the lid (3) or with the vessel (2), when the gasket (10) is mounted the wrong way up in the utensil (1), in order to form a permanent leakage orifice.

11. A cooking utensil (1) for cooking food under pressure, **characterized in that** it is provided with a sealing gasket (10) according to any one of claims 1 to 10.

12. A cooking utensil (1) for cooking food under pressure according to claim 11, **characterized in that** it has a lid (3) held on a vessel (2) by spaced-apart locking means (6), such as jaws (7), said lid (3) having one or more unobstructed portions (3') between said locking means, and **in that** the sealing gasket (10) is placed in such a manner that at least one escape window (20) is situated substantially in register with one of said unobstructed portions (3'), such that the deformation of the corresponding unobstructed portion (3') under the effect of the pressure prevailing inside the cooking enclosure contributes to usefully moving said escape window (20), making it possible to open up a leakage orifice when said pressure exceeds a predetermined threshold (Ps).
